# EUROPÄISCHE PATENTSCHRIFT

(11) **EP 4 341 627 B1**
(45) Veröffentlichungstag und Bekanntmachung des Hinweises auf die Patenterteilung: **25.12.2024**
(21) Anmeldenummer: 22727238.2
(22) Anmeldetag: 12.05.2022
(51) Int. Cl.: F27D 1/00, F27D 11/02, H05B 3/02, H05B 3/66, H05B 3/06, B28B 1/00, B33Y 10/00, B33Y 80/00, F27D 99/00

(54) **HALTEELEMENT FÜR EINEN HOCHTEMPERATUROFEN**
HOLDING ELEMENT FOR A HIGH-TEMPERATURE FURNACE
ÉLÉMENT DE RETENUE POUR UN FOUR À HAUTE TEMPÉRATURE

(30) Priorität: 19.05.2021 AT 5010621 U
(43) Veröffentlichungstag der Anmeldung: 27.03.2024
(73) Patentinhaber: Plansee SE, 6600 Reutte (AT)
(72) Erfinder: MALLAUN, Peter, 6600 Reutte (AT); HANDTRACK, Dirk, 6600 Reutte (AT); KLEINPASS, Bernd, 6600 Reutte (AT); PARTNER, Lukas, 6600 Reutte (AT)
(74) Vertreter: Ciesla, Dirk
(86) Internationale Anmeldenummer: PCT/AT2022/060166
(87) Internationale Veröffentlichungsnummer: WO 2022/241491

(56) Entgegenhaltungen:
- AT-U1- 16 588

## Beschreibung

Die vorliegende Erfindung betrifft ein Halteelement für einen Hochtemperaturofen mit den Merkmalen des Oberbegriffs von Anspruch 1.

Unter Hochtemperaturöfen sind im Zusammenhang mit dieser Anmeldung elektrisch beheizte Öfen gemeint, wie z.B. in der AT 16 588 U1 beschrieben, die für Betriebstemperaturen von größer 600°C ausgelegt sind. Insbesondere richtet sich die Erfindung an Anwendungen mit Betriebstemperaturen von größer 800°C.

Die Heizung von Hochtemperaturöfen erfolgt typischerweise durch Stromdurchgang durch Heizleiter, die von einer Heizleiteraufhängung getragen werden und Wärme in einen Prozessraum abgeben.

Konstruktiv erfolgt dies in der Regel so, dass eine Stützkonstruktion aus einer Abschirmung in den Prozessraum ragt. Die Stützkonstruktion kann beispielsweise als ein Bolzen oder als ein Profil ausgebildet sein. An der Stützkonstruktion - die auch elektrisch mit der Abschirmung verbunden ist - ist über ein elektrisch isolierendes Halteelement eine Heizleiteraufhängung befestigt. Der eine oder mehrere Heizleiter werden schließlich von der Heizleiteraufhängung getragen.

Ein Halteelement im Zusammenhang mit der vorliegenden Anmeldung hat also die Aufgabe, eine Heizleiteraufhängung mechanisch mit einer Stützkonstruktion zu verbinden und gleichzeitig die Heizleiteraufhängung elektrisch von der Stützkonstruktion zu isolieren. Es ist bekannt, Halteelemente als keramische Hülsen auszubilden, welche in die Stützkonstruktion eingeführt werden.

Beim Betrieb von Hochtemperaturöfen kommt es regelmäßig zu Materialabdampfung von Wärmebehandlungsgut und in Folge zu Niederschlägen des abgedampften Materials. Eine Ablagerung solcher Abdampfungen von Wärmebehandlungsgut auf einem Halteelement bewirkt eine Minderung der elektrischen Isolierwirkung bis hin zu einer elektrischen Leitfähigkeit, was eine Kurzschlussbildung zwischen Heizleitern und der Stützkonstruktion bzw. der Abschirmung zur Folge haben kann.

Als Abhilfe dieser Problematik müssen Reinigungsglühungen vorgesehen werden, oder verunreinigte Halteelemente müssen frühzeitig ausgetauscht werden. Dies verursacht hohe Kosten, Anlagenstillstände und erhöhten Energieverbrauch.

Aufgabe der vorliegenden Erfindung ist es, ein verbessertes Halteelement anzugeben. Insbesondere soll eine Wahrung der elektrischen Isolierwirkung des Halteelements über einen Nutzungszeitraum des Hochtemperaturofens verbessert werden. Es ist insbesondere wünschenswert, wenn das Halteelement auch bei erlittener Bedampfung seine elektrische Isolierwirkung behält.

Die Aufgabe wird gelöst durch ein Halteelement mit den Merkmalen von Anspruch 1. Bevorzugte Weiterbildungen sind in den abhängigen Ansprüchen definiert.

Durch ein Halteelement mit:
wenigstens einem, an einem Teil einer Oberfläche des Halteelements ausgebildeten Befestigungsabschnitt zur mechanischen Anbindung des Halteelements an eine Stützkonstruktion,
wenigstens einem, an einem Teil der Oberfläche des Halteelements ausgebildeten Heizleiteraufnahmeabschnitt zur Aufnahme eines Heizleiters,
wobei an einem zwischen Befestigungsabschnitt und Heizleiteraufnahmeabschnitt liegenden umlaufenden Teil der Oberfläche des Halteelements wenigstens eine Nut mit einer Tiefe und einer Breite ausgebildet ist, welche Nut sich im Wesentlichen über den gesamten Umfang des umlaufenden Teils der Oberfläche erstreckt und wenigstens ein gedachter Pfad zwischen dem Befestigungsabschnitt und dem Heizleiteraufnahmeabschnitt entlang der Oberfläche des Halteelements die wenigstens eine Nut kreuzt, wobei eine Nut ein aus dem Verhältnis der Tiefe zur Breite gebildetes Aspektverhältnis von größer oder gleich 1,5 aufweist,
bleibt auch bei einer unerwünschten Kontamination einer Oberfläche des Halteelements die elektrische Isolierwirkung des Halteelements erhalten.

Bei dem erfindungsgemäßen Halteelement wird eine Bildung eines durchgängigen elektrisch leitfähigen Pfades durch Abscheidung elektrisch leitfähiger Niederschläge wirksam verhindert.

Die Nut kann geometrisch verschiedenartig realisiert sein. Funktionell folgt die Ausgestaltung der Nut der Maßgabe, dass die Gestalt der Nut eine Abschattung einer Nutkontur gegenüber einer Abscheidung eines Niederschlags bewirkt. Insbesondere erfährt ein Nutgrund keine Abscheidung.

Dadurch wird das Auftreten eines durchgängigen elektrisch leitfähigen Pfades quer zur Nut verhindert.

Damit, dass sich die Nut "im Wesentlichen" über den gesamten Umfang des umlaufenden Teils der Oberfläche erstreckt, ist gemeint, dass die Nut größtenteils durchgehend ist.

Vorzugsweise ist die Nut komplett durchgehend, bildet also einen geschlossenen Ring entlang eines Umfangs des Halteelements. Durch die unterbrechungsfreie Ausgestaltung wird die Bildung eines durchgängigen elektrisch leitfähigen Pfades besonders wirksam unterbunden.

Mit dem "umlaufenden Teil" der Oberfläche ist gemeint, dass die Nut an einer Teilfläche der Oberfläche ausgebildet ist, welche Teilfläche einen umfänglich geschlossenen Oberflächenabschnitt bildet. Bewegt man sich auf der umlaufenden Teilfläche in eine Richtung, so gelangt man wieder zum Ausgangspunkt. Technisch bedeutet das Merkmal der Ausbildung der Nut an einem umlaufenden Teil der Oberfläche, dass die Nut tatsächlich eine wirksame Unterbrechung zwischen Befestigungsabschnitt und Heizleiteraufnahmeabschnitt bilden kann.

Es sind Formen des Halteelements vorstellbar, bei denen die Nut nicht zu 100% durchgehend ist, beispielsweise weil ein bestimmter Abschnitt der Oberfläche des Halteelements durch andere Maßnahmen vor einer Beschichtung geschützt ist. An solchen Stellen wäre es nicht unbedingt erforderlich, dass die Nut sich durchgehend erstreckt. Daher wird in diesem Zusammenhang unter "im Wesentlichen" verstanden, dass sich die Nut über ≥ 80% eines Umfangs erstreckt, bevorzugt über ≥ 90%.

Mit Umfang ist eine Strecke entlang der Oberfläche gemeint, die wieder zum Ausgangspunkt führt.

In der Regel aber und bevorzugt erstreckt sich die Nut komplett durchgehend, also unterbrechungsfrei über den umlaufenden Teil der Oberfläche.

In der Regel und bevorzugt erstreckt sich die Nut zur Gänze an einer äußeren Oberfläche des Halteelements, da eine etwaige Abscheidung eines Niederschlags hauptsächlich an äußeren und freiliegenden Oberflächen stattfindet.

Der Befestigungsabschnitt erlaubt eine mechanische Anbindung des Halteelements an eine Stützkonstruktion. Die Anbindung kann unmittelbar, also direkt oder mittelbar, etwa über ein Verbindungselement erfolgen.

Der Befestigungsabschnitt kann ganz unterschiedliche Formen annehmen. Es kann sich beispielsweise um einen Oberflächenabschnitt des Halteelements handeln, der so geformt ist, dass er in eine korrespondierende Aufnahme einer Stützkonstruktion eingeführt oder eingelegt werden kann. Alternativ oder zusätzlich kann die mechanische Anbindung zur Stützkonstruktion kraftschlüssig und /oder formschlüssig über ein Verbindungselement erfolgen. Der Befestigungsabschnitt kann also auch eine Aufnahme für ein Verbindungselement bilden oder eine solche Aufnahme enthalten. Die Stützkonstruktion kann beispielsweise als ein Bolzen oder als ein Profil ausgebildet sein. Es ist auch vorstellbar, dass die Abschirmung selbst eine Anbindung des Halteelements erlaubt, beispielsweise indem die Abschirmung eine - gegebenenfalls verstärkte - Aussparung aufweist. In diesem Fall fungiert die Abschirmung selbst als Stützkonstruktion.

Ein Teil der Oberfläche des Halteelements ist als Heizleiteraufnahmeabschnitt zur mittelbaren oder unmittelbaren Aufnahme eines Heizleiters ausgebildet. Der vom Befestigungsabschnitt verschiedene Heizleiteraufnahmeabschnitt ist örtlich vom Befestigungsabschnitt beabstandet. In anderen Worten ist der Befestigungsabschnitt zumindest teilweise an einem anderen Bereich der Oberfläche des Halteelements ausgebildet.

Eine mittelbare oder unmittelbare Aufnahme eines Heizleiters bedeutet, dass die Aufnahme des Heizleiters über eine Hilfsstruktur, beispielsweise einen Heizleiterhalter erfolgen kann bzw. im Falle einer unmittelbaren Aufnahme, dass der Heizleiteraufnahmeabschnitt den Heizleiter oder eine Heizleiterzuleitung direkt fasst.

Insbesondere ist vorgesehen, dass der Heizleiteraufnahmeabschnitt einen Heizleiterhalter bzw. einen Heizleiter zumindest teilweise umgreift, um eine sichere Positionierung zu gewährleisten. Beispielsweise kann der Heizleiteraufnahmeabschnitt eine Durchführung für einen Heizleiter oder eine Heizleiterzuleitung bilden. Eine Heizleiterzuleitung wird zum Heizleiter zugehörig begriffen.

Bevorzugt kann vorgesehen sein, dass der Heizleiteraufnahmeabschnitt und / oder der Heizleiterhalter eine thermische Dehnung von Heizleiterhalter und /oder Heizleiter durch Vorsehen von Spiel zulassen.

Zwischen Befestigungsabschnitt und Heizleiteraufnahmeabschnitt liegt ein Teil der Oberfläche des Halteelements. Befestigungsabschnitt und Heizleiteraufnahmeabschnitt sind durch den dazwischenliegenden Oberflächenabschnitt auch elektrisch voneinander getrennt, das heißt isoliert.

Das Halteelement ist so ausgebildet, dass ein gedachter Pfad zwischen dem Befestigungsabschnitt und dem Heizleiteraufnahmeabschnitt entlang der Oberfläche des Halteelements die wenigstens eine Nut kreuzt.

In anderen Worten ist eine Verbindung zwischen Befestigungsabschnitt und dem Heizleiteraufnahmeabschnitt entlang der Oberfläche stets von einer Nut unterbrochen. Durch diese Anordnung der wenigstens einen Nut ist gewährleistet, dass ein potentieller Strompfad zumindest eine Nut quert. Diese Anordnung, zusammen mit der eigentlichen Ausgestaltung der Nut, stellt eine Unterbrechung des potenziellen Strompfads sicher.

Zur Erzielung des technischen Effektes ist vorgesehen, dass eine Nut ein aus dem Verhältnis der Tiefe und der Breite gebildetes Aspektverhältnis von größer 1,5 aufweist. Weiter bevorzugt ist das Aspektverhältnis größer 3, noch weiter bevorzugt größer 5. Eine besonders vorteilhafte Kombination wurde beispielsweise in einer Nutbreite von rund 0,5 mm und einer Tiefe der Nut von 3 mm gefunden, was einem Aspektverhältnis von 6 entspricht.

Das Aspektverhältnis beschreibt also eine Gestrecktheit oder Schlankheit der Nut. Je größer das Aspektverhältnis, desto effektiver ist die Abschattungswirkung der Nut. Aspektverhältnisse von größer 10 bringen kaum zusätzliche Wirkung, da der Nutgrund dann in der Regel ohnehin nicht mehr von einem Niederschlag erreicht wird. Daher ist das Aspektverhältnis bevorzugt ≤ 10.

Die Tiefe der Nut ist festgelegt durch den Abstand des Nutgrunds von der Oberfläche des Halteelements.

Bei einem Abweichen von einer rechteckigen Querschnittsform der Nut kann als Breite zur Bestimmung des Aspektverhältnis eine geringste Breite herangezogen werden.

Bevorzugt weist die Nut eine Tiefe von wenigstens 1 mm auf, wodurch eine Abschattung von Nutflanken und / oder eines Nutgrunds gegenüber einer Abscheidung maßgeblich in Erscheinung tritt. Darunter, also bei einer zu flachen Nut, wird möglicherweise die Bildung eines durchgängigen elektrisch leitfähigen Pfades nicht wirksam verhindert.

Eine Breite der Nut liegt bevorzugt bei wenigstens 0,25 mm. Darunter, also bei einer zu schmalen Nut, könnte es zu einer Überbrückung von Nutflanken durch die sich abscheidenden Niederschläge kommen.

Bevorzugt ist vorgesehen, dass eine Vielzahl von Nuten ausgebildet ist, insbesondere zwei oder drei Nuten. Die Ausbildung einer Vielzahl von Nuten ist hilfreich zur sicheren Unterbindung der Bildung eines durchgängigen elektrisch leitfähigen Pfades.

Bevorzugt ist vorgesehen, dass eine Nut eine Tiefe zwischen 3 mm und 10 mm aufweist. Bei einer Tiefe gemäß dieser Weiterbildung ist eine Abschattung von Nutflanken und / oder eines Nutgrunds vorteilhaft sichergestellt. Noch größere Tiefen bringen hinsichtlich Abschattung nicht mehr viel, sind aber in der Regel schwerer herzustellen und / oder schwächen das Halteelement strukturell.

Bevorzugt ist vorgesehen, dass eine Nut eine Breite zwischen 0,25 mm und 3 mm aufweist. Die Werte haben sich als besonders günstig erwiesen: liegt die Breite unter 0,25 mm, so kann es zu Überbrückungen der Nutflanken kommen. Bei Breiten über 3 mm kann es - abhängig von einer Exposition, Tiefe der Nut etc. - gegebenenfalls zu einem leitungspfadbildenden Niederschlag in der Nut kommen. Noch weiter bevorzugt sind Breiten in einem Bereich zwischen 0,5 mm und 2 mm.

Bevorzugt kann vorgesehen sein, dass eine Nut zumindest abschnittsweise eine Hinterschneidung aufweist, durch welche Hinterschneidung zumindest abschnittsweise ein erster freier Nutquerschnitt bei einem ersten Abstand zur Oberfläche geringer ist als ein zweiter freier Nutquerschnitt bei einem zweiten Abstand zur Oberfläche, wobei der erste Abstand kleiner ist als der zweite Abstand. Damit ist gemeint, dass in der Nut es zumindest abschnittsweise eine verengte Stelle gibt gegenüber dem anschließenden Querschnitt der Nut. Damit kann beispielsweise ein Niederschlag nach der Hinterschneidung weiter reduziert werden. Mit "nach" bezüglich der Hinterschneidung ist "tiefer" gemeint, also an bezüglich der Oberfläche weiter entfernten Positionen.

Bevorzugt kann vorgesehen sein, dass die Nut zumindest abschnittsweise eine Aufweitung aufweist, durch welche Aufweitung zumindest abschnittsweise ein freier Nutquerschnitt vergrößert ist. Eine Wandung einer solchen Aufweitung ist besonders unzugänglich für einen Niederschlag. Somit kann eine solche Aufweitung zusätzlich zur Vermeidung eines durchgängigen elektrisch leitfähigen Pfades beitragen.

Bevorzugt kann vorgesehen sein, dass die Nut eine Haupterstreckungsrichtung aufweist, die an wenigstens einer Stelle abweicht von der Richtung der Ebenennormalen an jener einen Stelle an der Oberfläche des Halteelements, an welcher die Nut ausgebildet ist. Damit ist gemeint, dass die Nut in dieser bevorzugten Weiterbildung nicht senkrecht, sondern abweichend von der Senkrechten schräg in das Halteelement hinein verläuft. Dies bringt den besonderen Vorteil mit sich, dass die Abschattungswirkung der Nut gegenüber einem Niederschlag weiter verbessert ist.

Besonders günstig ist eine Ausprägung, bei der ein Nutgrund von einem senkrecht in die Nut einfallenden Strahl geometrisch nicht mehr erreicht wird. Die oben genannten Hinterschneidungen und Aufweitungen sowie der schräge Verlauf lassen sich besonders elegant über additive Fertigungsverfahren realisieren.

Bevorzugt ist das Halteelement monolithisch, das heißt einstückig ausgebildet. Eine Einstückigkeit bringt verschiedene Vorteile mit sich: so können mehrere Funktionen in einem Bauteil integriert werden. Eine elektrische Isolierwirkung ist besser vorhersehbar als beispielsweise bei Stapelanordnungen einzelner Scheiben. Ferner ist eine Montage erleichtert.

Wird beispielsweise das Halteelement aus einzelnen, zum Halteelement zusammengesetzten Ringen gebildet, könnte sich ein Spaltmaß zwischen den Ringen beim Aufheizen verändern und das Halteelement damit an Funktion einbüßen. Zur Wahrung der Spaltmaße müsste beispielsweise mit einer Vorspannung durch Federn gearbeitet werden, was auf die Dauer bei Hochtemperatur-Anwendungen problematisch ist. Demgegenüber ist eine monolithische Lösung bezüglich der Funktionalität und Haltbarkeit vorteilhaft.

In einer Weiterbildung ist das Halteelement als Durchführung durch eine Abschirmung ausgebildet. Hier ist das Halteelement dazu ausgestaltet, in oder durch die Abschirmung gesteckt zu werden. In einer Einbausituation wirkt das Halteelement als elektrisch isolierende Hülse in der Abschirmung, wobei die Abschirmung als Stützkonstruktion fungiert.

Das Halteelement dieser Weiterbildung erlaubt eine elektrische isolierte Durchführung eines Heizungsanschlusses, das heißt einer elektrischen Zuleitung, durch die Abschirmung. Auf eine gesonderte elektrische Isolierung dieser elektrischen Zuleitung kann dann verzichtet werden.

In einer Ausführungsform dieser Weiterbildung ist das Halteelement eine keramische Hülse, etwa ein Hohlzylinder, wobei an wenigstens einer dessen Stirnseiten eine Nut wie oben diskutiert ausgebildet ist.

Bevorzugt besteht das Halteelement aus einer hochtemperaturbeständigen Keramik. Insbesondere geeignet sind technische Keramiken wie beispielsweise Aluminiumoxid (Al₂O₃), Zirkonoxid (ZrO₂), Siliziumoxid (SiO₂), Siliciumnitrid (Si₃N₄) und Mischungen technischer Keramiken.

"Bestehen" ist hier so zu verstehen, dass der maßgebliche Anteil von der entsprechenden Keramik gebildet ist. Weiter bevorzugt besteht das Halteelement zu ≥ 98% aus der jeweiligen technischen Keramik bzw. einer Mischung technischer Keramiken. Übliche Verunreinigungen können vorhanden sein.

Bevorzugt besteht das Halteelement zur Gänze aus der jeweiligen Keramik. Mit Aluminiumoxid einer Reinheit von größer oder gleich 99,7 % sind besonders hohe Einsatztemperaturen möglich und es kann eine gute elektrische Isolierwirkung erzielt werden.

Bevorzugt ist das Halteelement über ein additives Fertigungsverfahren dargestellt. Die Herstellung über ein additives Fertigungsverfahren ist besonders vorteilhaft für kleinere Stückzahlen und/oder bei der Realisierung komplexer Formenausführungen und erlaubt zudem insbesondere die Vereinigung mehrerer Funktionen in einem Bauteil.

Die Nuten können durch Aussparung von Material realisiert werden und müssen nicht - wie bei einer klassischen Fertigung - durch Schleifen eingebracht werden. Dies erlaubt auch zusätzliche Freiheitsgrade in der Ausgestaltung der Nuten wie die erwähnten Hinterschneidungen und Verengungen.

Insbesondere geeignet ist die Erfindung für einen metallischen Hochtemperaturofen.

Bei einem metallischen Hochtemperaturofen besteht eine Isolierung eines Prozessraums gegenüber einer Ofenhülle im Wesentlichen aus Metall. Solche metallischen Hochtemperaturöfen weisen üblicherweise eine sogenannte Strahlungsabschirmung auf, welche von im Wesentlichen parallel zueinander angeordneten und über Distanzierungsmittel voneinander beabstandeten Blechen aus Refraktärmetall, insbesondere Wolfram, Molybdän oder deren Legierungen gebildet ist. Unter Refraktärmetallen werden im Rahmen der vorliegenden Erfindung die Metalle der 4. Gruppe (Titan, Zirconium und Hafnium), der 5. Gruppe (Vanadium, Niob, Tantal) und der 6. Gruppe (Chrom, Molybdän, Wolfram) des Periodensystems sowie Rhenium verstanden. Unter Refraktärmetalllegierungen sind Legierungen mit wenigstens 50 at. % des betreffenden Elements gemeint. Diese Werkstoffe weisen unter anderem eine ausgezeichnete Formbeständigkeit bei hohen Einsatztemperaturen auf. Metallische Hochtemperaturöfen erlauben die Einstellung von besonders reinen Ofenatmosphären, was bei keramischen oder graphitischen Öfen nicht immer möglich ist. Ferner sind sie insbesondere für Wärmebehandlungen unter Vakuum geeignet, da keine ausgasenden und / oder porösen Oberflächen vorhanden sind.

Das erfindungsgemäße Halteelement unterstützt die technischen Möglichkeiten metallischer Hochtemperaturöfen und verbessert deren Wirtschaftlichkeit.

Schutz wird auch begehrt für ein Verfahren zur Herstellung eines Halteelements der Erfindung.

Bei komplexen Geometrien und / oder geringen Stückzahlen erfolgt die Herstellung bevorzugt über ein Verfahren der additiven Fertigung.

Als insbesondere vorteilhaft haben sich binderbasierte additive Fertigungsverfahren erwiesen. Darunter ist der Filamentdruck besonders bevorzugt.

Zur Ausbildung der Nut wird an den Orten der späteren Nut kein Material abgelegt oder es kann ein temporärer Platzhalter, beispielsweise Binder ohne Pulver abgelegt werden.

Für größere Stückzahlen bietet sich die Herstellung über Pulverspritzguss an (engl. *powder injection moulding,* PIM). Bei keramischen Pulvern wie im vorliegenden Fall spricht man üblicherweise von Keramikspritzguss (engl. *ceramic injection moulding,* CIM). Dabei wird ein Keramikpulver mit Binder zur einer plastifizierbaren Masse verarbeitet, die sich wie im Kunststoff-Spritzguss verarbeiten lässt. Der gewonnene Grünkörper wird entbindet und gesintert.

Die Nut kann durch das Formwerkzeug abgebildet werden.

Ferner ist freilich eine mechanische Einbringung der Nuten möglich. Dies kann in einem Grünzustand oder in einem gesinterten Zustand des Halteelements erfolgen.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: einen Ausschnitt eines metallischen Hochtemperaturofens
- Fig. 2:: ein Detail von Abschirmung und Heizleiteraufhängung
- Fig. 3: ein Halteelement in einem ersten Ausführungsbeispiel
- Fig. 4a-4e: ein Halteelement in einem nächsten Ausführungsbeispiel
- Fig. 5a-5c: ein Halteelement in einem weiteren Ausführungsbeispiel
- Fig. 6a-6b: ein Halteelement in einem weiteren Ausführungsbeispiel
- Fig. 7a-7d: ein Halteelement in einem weiteren Ausführungsbeispiel
- Fig. 8a-8c: besondere Ausgestaltungen von Nuten
- Fig. 9: ein Halteelement in einem weiteren Ausführungsbeispiel

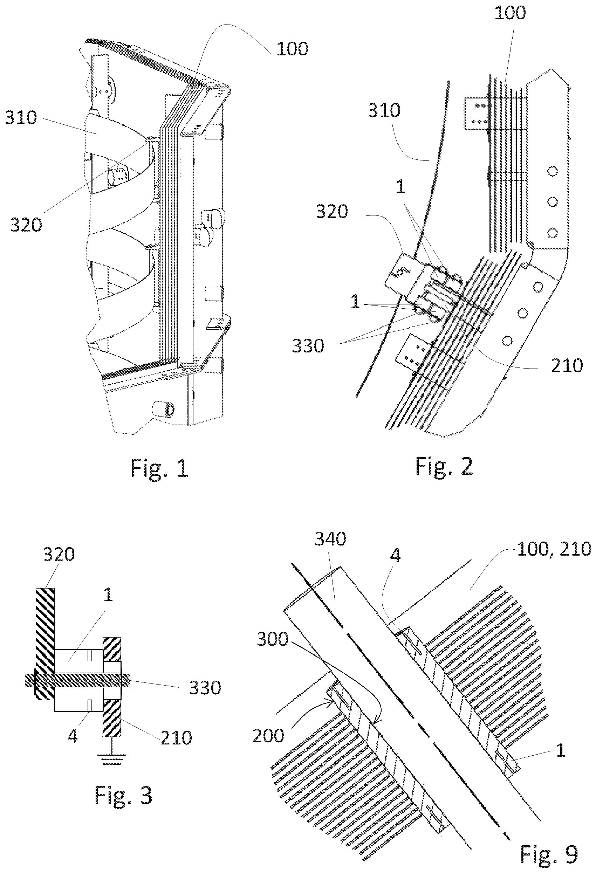

Figur 1 zeigt zur Orientierung, schematisch und ausschnittsweise, eine typische Abschirmung 100 eines metallischen Hochtemperaturofens. Die Abschirmung 100 ist aus einem Stapel von beabstandeten Blechen gebildet. Insbesondere sind die Bleche aus Refraktärmetall. In der gezeigten Darstellung setzt sich links ein Prozessraum fort, der von der Abschirmung 100 gegenüber einem gekühlten Ofenmantel (nach rechts, nicht gezeigt) isoliert wird. Ein Heizleiter 310 wird von Heizleiteraufhängungen 320 getragen. Die Heizleiteraufhängungen 320 sind hier als Bügel ausgeführt, die einen bandförmigen Heizleiter 310 in Position halten. Die konkrete Ausgestaltung von Abschirmung, Heizleiter und Heizleiteraufhängungen kann variieren.

Figur 2 zeigt in einer Draufsicht die Gegebenheiten einer Heizleiteraufhängung 320. Durch die Abschirmung 100 hindurch ist eine Stützkonstruktion 210 geführt. Die Stützkonstruktion 210 kann beispielsweise als Profilschiene oder als ein Rohr ausgeführt sein. Die Stützkonstruktion 210 hat die Aufgabe, gegebenenfalls mittels einer Heizleiteraufhängung 320, einen Heizleiter 310 mechanisch zu halten. Die Stützkonstruktion 210, ein Ofenmantel (nicht gezeigt), und die Abschirmung 100 sind leitend miteinander verbunden, sie liegen also auf demselben elektrischen Potential, in der Regel auf Masse (engl. *ground*)*.*

Die Beheizung des Ofens erfolgt mittels Heizleiter 310 durch elektrische Widerstandsheizung. Dazu muss der Heizleiter 310 elektrisch von der Stützkonstruktion 210 isoliert sein. Diese elektrische Entkopplung erfolgt durch Halteelemente 1, die in dem gezeigten Beispiel als keramische Hülsen ausgeführt sind. Die keramischen Hülsen (im vorliegenden Beispiel vier Stück, jeweils zwei pro Seite) ragen abschnittsweise in die Stützkonstruktion 210 und werden von durchgesteckten Bolzen 330 in Position gehalten. An den Enden der Bolzen 330 fixieren Sicherungsmittel wie etwa Sprengringe oder Splinte den Zusammenbau. Durch die Halteelemente 1 bleiben die durchgesteckten Bolzen 330 von der Stützkonstruktion 210 beabstandet und dadurch isoliert.

Nachteilig an bekannten Lösungen ist es, dass durch Verunreinigungen, beispielsweise Abdampfungen von Wärmebehandlungsgut, es zur Bildung von leitfähigen Pfaden auf Halteelementen kommen kann, die schließlich einen Kurzschluss zwischen Heizleiter 310 bzw. Heizleiteraufhängung 320 und der Stützkonstruktion 210 verursachen können.

Die Gefahr der Bildung einer leitenden Beschichtung besteht nicht nur durch ein Abdampfen von Metallen aufgrund hohen Dampfdrucks (z.B. Kupfer), sondern auch durch thermo-chemische Transportprozesse (z.B. über lokales Oxidieren --> Transport des Oxidgases --> lokales Reduzieren) und Sputtereffekte bei Arcing (z.B. bei falscher Chargierung).

Figur 3 zeigt in einer schematischen Skizze ein erfindungsgemäßes Halteelement 1 in einem ersten Ausführungsbeispiel, durch welches die oben genannten Probleme überwunden werden können. Figur 3 zeigt einen Querschnitt entlang der Längsachse des hier zylindrischen Halteelements 1 und des darin verlaufenden Bolzens 330.

Die mechanische Befestigung der Heizleiteraufhängung 320 an der Stützkonstruktion 210 erfolgt über das isolierende Halteelement 1. Man erkennt, dass der Bolzen 330 durch einen am Halteelement 1 ausgebildeten, in die Stützkonstruktion 210 ragenden Absatz von der Stützkonstruktion 210 beabstandet und so elektrisch isoliert ist. An dem zylindrischen Halteelement 1 ist eine umlaufende Nut 4 ausgebildet, welche die Entstehung eines durchgängigen elektrisch leitfähigen Pfades zwischen Stützkonstruktion 210 und Heizleiteraufhängung 320 verhindert.

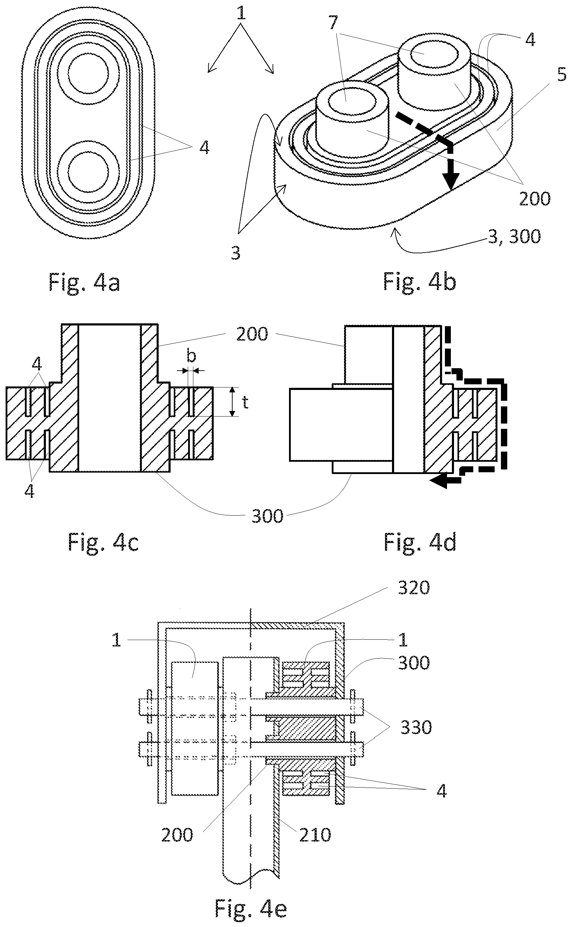

Figuren 4a bis 4e zeigen verschiedene Ansichten eines erfindungsgemäßen Halteelements 1 in einem nächsten Ausführungsbeispiel. Dabei zeigt Figur 4a eine Draufsicht, Figur 4b eine perspektivische Ansicht, Figur 4c einen Vollschnitt, Figur 4d einen Halbschnitt. Halbschnitt bedeutet, dass eine Hälfte der Zeichnung einen Querschnitt des bestreffenden Bauteils zeigt, die andere Bildhälfte eine ungeschnittene Ansicht.

Bei dem Halteelement 1 des vorliegenden Ausführungsbeispiels ist der Befestigungsabschnitt 200 in Form zweier hülsenförmiger Fortsätze an einem Teil einer Oberfläche 3 ausgebildet. Der Befestigungsabschnitt 200 erlaubt ein Einstecken in eine Stützkonstruktion 210, wie es in Figur 4e gezeigt ist. Die Schnitte der Figuren 4c und 4d sind jeweils mittig, also entlang eines Durchmessers, durch die hülsenförmigen Fortsätze 7 gelegt.

Das Halteelement 1 nach diesem Ausführungsbeispiel weist einen Grundkörper 5 mit zwei hülsenförmigen Fortsätzen 7 auf, welche beispielsweise in eine Stützkonstruktion 210 eingeführt werden können. In diesem Ausführungsbeispiel ist eine mechanische Verbindung zu einer Stützkonstruktion 210 beispielsweise über Bolzen möglich, die durch das Halteelement 1 und eine Stützkonstruktion 210 gesteckt werden. Um bei dem konkreten Beispiel der Befestigung zu bleiben, ist der genannte Bolzen dann durch einen hülsenförmigen Fortsatz 7 von einer Stützkonstruktion 210 getrennt und dadurch elektrisch von dieser isoliert.

Vom Befestigungsabschnitt 200 beabstandet liegt ein Heizleiteraufnahmeabschnitt 300 zur mittelbaren oder unmittelbaren Aufnahme eines Heizleiters (hier nicht gezeigt). Der Heizleiteraufnahmeabschnitt 300 ist hier eine dem Befestigungsabschnitt 200 abgewandte Stirnfläche des Halteelements 1. Im vorliegenden Beispiel sind jeweils zwei parallel verlaufende Nuten 4 ausgeführt an einer dem Befestigungsabschnitt 200 zugewandten und einer dem Heizleiteraufnahmeabschnitt 300 zugewandten Stirnfläche des Halteelements 1 ausgebildet. Die Nuten 4 sind jeweils umlaufend und geschlossen. Damit ist die Situation geschaffen, dass an einem zwischen Befestigungsabschnitt 200 und Heizleiteraufnahmeabschnitt 300 liegenden umlaufenden Teil der Oberfläche 3 des Halteelements 1 wenigstens eine Nut 4 ausgebildet ist, die sich über den gesamten Umfang der Oberfläche 3 erstreckt.

Wie aus der Darstellung von Figur 4b ersichtlich, ist im Rahmen dieser Offenbarung mit einem "Umfang" entlang der Oberfläche 3 nicht notwendigerweise der längste Pfad entlang der Oberfläche 3 gemeint. Vielmehr verlaufen Nuten 4 in diesem Ausführungsbeispiel an einer dem Befestigungsabschnitt 200 zugewandten Stirnfläche des Halteelements 1, und ein weiteres Paar an Nuten 4 verläuft an einer dem Heizleiteraufnahmeabschnitt 300 zugewandten Stirnfläche des Halteelements 1.

Aus der Darstellung in Figur 4c gehen Breite - b - und Tiefe - t - der Nut 4 hervor. Ein aus dem Verhältnis der Tiefe - t - zur Breite - b - gebildetes Aspektverhältnis ist größer oder gleich 1,5 , im vorliegenden Ausführungsbeispiel beträgt das Aspektverhältnis etwa 6. Das Aspektverhältnis vermittelt ein Maß für die Gestrecktheit der Nut 4 und damit ein Maß für die Wirksamkeit der Nut 4, eine Abscheidung eines Niederschlags an einer Nutkontur, insbesondere an einem Nutgrund zu verhindern. Bei einem Aspektverhältnis von größer oder gleich 1,5 wird das Auftreten eines durchgängigen elektrisch leitfähigen Pfades entlang der Nutkontur verhindert. Es bleibt also stets unbeschichtete Oberfläche vorhanden, und somit wird kein leitfähiger Pfad quer zur Nut 4 gebildet.

Die Nuten 4 sind hier gleich ausgeführt. Natürlich könnten sich, bei einer Mehrzahl von Nuten 4, diese voneinander unterscheiden. Auch ist es nicht zwingend erforderlich, dass eine Nut 4 entlang ihrer Erstreckung überall gleich gestaltet ist. Beispielsweise könnte eine Querschnittsform entlang der Erstreckung einer Nut 4 variieren.

Die Querschnittsform der Nuten 4 ist in diesem Ausführungsbeispiel rechteckig. Die Tiefe - t - bemisst sich von der Oberfläche 3 zum Nutgrund. Als Breite - b - wird bei einem Abweichen von der rechteckigen Gestalt sinnvollerweise eine engste Breite der Nut herangezogen, denn die engste Stelle ist für eine Abschattungswirkung der Nut 4 maßgeblich.

In einer Weiterbildung können Nuten 4 auch schräg zur Oberfläche 3 verlaufen, was eine Abschattungswirkung der Nut 4 gegebenenfalls weiter verbessert.

In Figuren 4b und 4d ist mit einem Blockpfeil ein gedachter Pfad zwischen Befestigungsabschnitt 200 und Heizleiteraufnahmeabschnitt 300 entlang der Oberfläche 3 illustriert. Wie ersichtlich, sind die Nuten 4 so angeordnet, dass der gedachte Pfad die Nuten 4 kreuzt. Damit ist gewährleistet, dass keine durchgängige elektrische Verbindung zwischen Befestigungsabschnitt 200 und Heizleiteraufnahmeabschnitt 300 besteht. In diesem Ausführungsbeispiel ist es vorgesehen, dass Nuten 4 an einer dem Befestigungsabschnitt 200 zugewandten Stirnfläche und Nuten 4 an einer dem Heizleiteraufnahmeabschnitt 300 zugewandten Stirnfläche ausgebildet sind. Dadurch muss der gedachte Pfad zwischen Befestigungsabschnitt 200 und Heizleiteraufnahmeabschnitt 300 sogar zweimal ein Paar von Nuten 4 queren, was eine Wirkung des Halteelements 1 gegen elektrischen Durchschlag weiter verbessert.

Figur 4e zeigt eine Montagesituation mit zwei Halteelementen 1 gemäß dem diskutierten Ausführungsbeispiel in einem Halbschnitt.

Die Halteelemente 1 ragen abschnittsweise in die Stützkonstruktion 210 und werden von durchgesteckten Bolzen 330 in Position gehalten. An den Enden der Bolzen 330 fixieren Sicherungsmittel wie etwa Sprengringe oder Splinte den Zusammenbau. Durch die Halteelemente 1 bleiben die durchgesteckten Bolzen 330 von der Stützkonstruktion 210 beabstandet und dadurch isoliert.

Am Heizleiteraufnahmeabschnitt 300 des Halteelements 1 ist eine - hier bügelförmige - Heizleiteraufhängung 320 montiert. Wie der Darstellung entnehmbar, quert ein gedachter Pfad zwischen Befestigungsabschnitt 200 und Heizleiteraufnahmeabschnitt 300 die Nuten 4.

Durch die Anordnung und die Ausgestaltung der Nuten 4 wird verhindert, dass eine etwaige Ablagerung eines leitfähigen Niederschlags auf dem Halteelement 1 zur Bildung eines durchgängigen elektrisch leitenden Pfades führt.

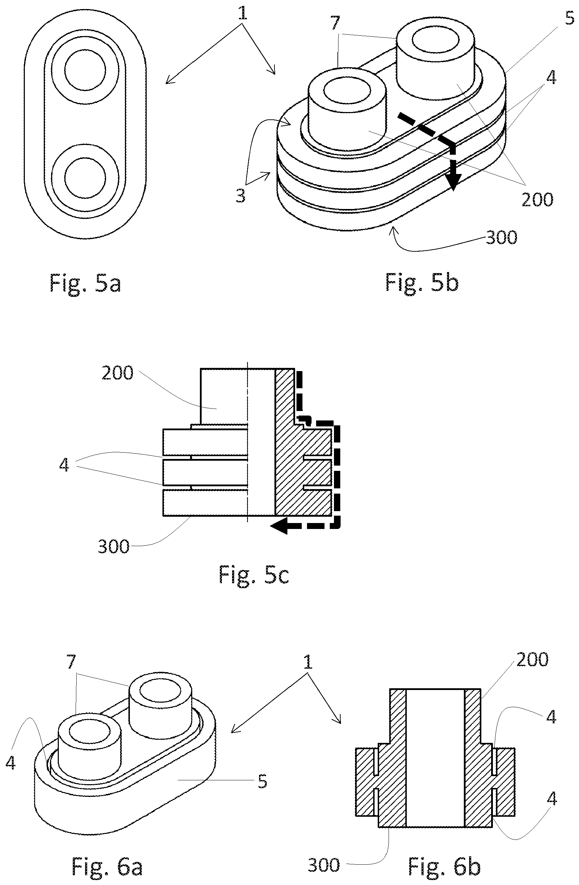

Figuren 5a bis 5c zeigen ein Halteelement 1 in einem anderen Ausführungsbeispiel. Dabei ist in Figur 5a eine Draufsicht, in Figur 5b eine perspektivische Ansicht und in Figur 5c ein Halbschnitt gezeigt.

Auf eine Wiederholung wiederkehrender Bezugszeichen wird verzichtet.

In Abweichung vom Ausführungsbeispiel der Figuren 4a-e sind hier die Nuten 4 an einer Mantelfläche des Grundkörpers 5 des Halteelements 1 eingeformt. Der zwischen Befestigungsabschnitt 200 und Heizleiteraufnahmeabschnitt 300 liegende umlaufende Teil der Oberfläche 3 ist hier also die Mantelfläche des Grundkörpers 5 des Halteelements 1.

Wie in Figur 5c über einen Blockpfeil visualisiert, muss auch hier der gedachte Pfad zwischen Befestigungsabschnitt 200 und Heizleiteraufnahmeabschnitt 300 die Nuten 4 queren, wodurch das Halteelement 1 einem elektrischen Durchschlag bei etwaiger Beschichtung durch einen Niederschlag entgegenwirkt. Damit ist eine wirksame Trennung von Befestigungsabschnitt 200 und Heizleiteraufnahmeabschnitt 300 durch die Nut 4 gegeben.

Figuren 6a und 6b zeigen ein Ausführungsbeispiel mit jeweils einer Nut 4 an Stirnflächen des Grundkörpers 5.

Freilich sind auch Kombinationen hinsichtlich der Anordnung der Nuten 4 möglich, das heißt eine Ausbildung von Nuten 4 an Stirn- und Mantelflächen.

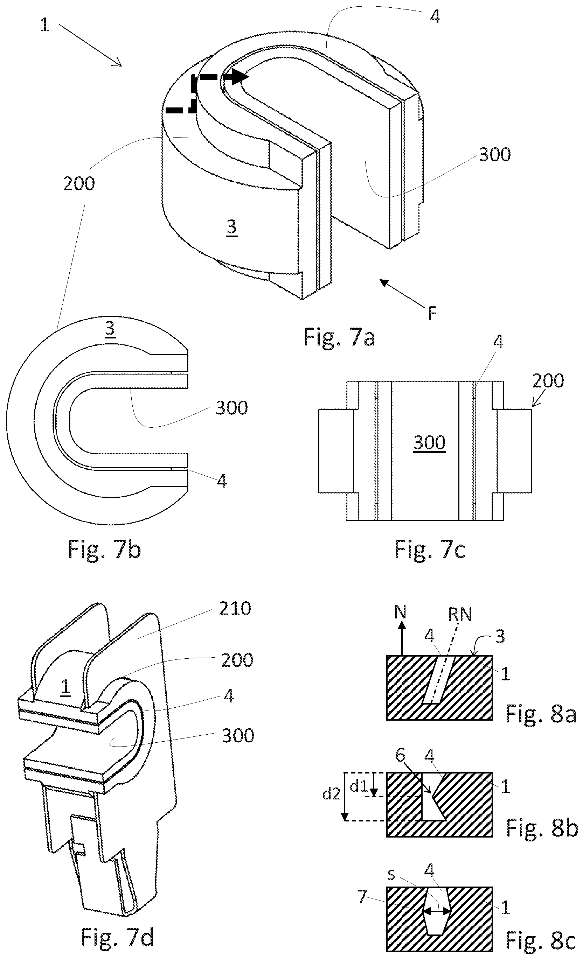

Figuren 7a bis 7d zeigen Ansichten eines Halteelements 1 nach einem weiteren Ausführungsbeispiel.

Figur 7a zeigt dabei eine perspektivische Ansicht, Figur 7b eine Draufsicht,

Figur 7c eine Frontalsicht, wie sie sich entlang der in Figur 7a eingezeichneten frontalen Blickrichtung - F - ergibt. Figur 7d zeigt das Halteelement 1 in einem Zusammenbau mit einer Stützkonstruktion 210.

Das Haltelement 1 ist in diesem Ausführungsbeispiel als eine Art C-förmige Klammer gestaltet. Der Befestigungsabschnitt 200 ist an einer Oberfläche an einem Rücken der C-Form ausgebildet. Eine Stützkonstruktion kann beispielsweise dazu korrespondierende Ausnehmungen aufweisen, sodass das Haltelement 1 in die Stützkonstruktion eingelegt oder eingeclipst werden kann. Bei dem Bild der C-Form bleibend, bildet die Öffnung der C-Form den Heizleiteraufnahmeabschnitt 300. In den Heizleiteraufnahmeabschnitt 300 kann beispielsweise direkt ein Heizleiter oder eine Heizleiteraufhängung eingelegt werden. Häufig ist es so, dass der Heizleiteraufnahmeabschnitt 300 ein gewisses Spiel zum Ausgleich thermischer Dehnungen von Heizleiter oder der Heizleiteraufhängung zulässt. Somit erfüllt das Haltelement 1 mehrere Funktionen besonders vorteilhaft in einem integrierten Bauteil.

Auch hier ist es realisiert, dass zwischen Befestigungsabschnitt 200 und Heizleiteraufnahmeabschnitt 300 ein umlaufender Oberflächenabschnitt definierbar ist, an welchem umlaufenden Teil der Oberfläche eine Nut 4 ausgebildet ist. Ein gedachter Pfad zwischen dem Befestigungsabschnitt 200 und dem Heizleiteraufnahmeabschnitt 300 entlang der Oberfläche 3 des Halteelements 1 kreuzt die wenigstens eine Nut 4, wodurch ein Kurzschluss durch etwaige Ablagerungen verhindert wird.

Figur 7d zeigt eine perspektivische Ansicht des Haltelements 1 im Zusammenbau mit der Stützkonstruktion 210. Die Stützkonstruktion 210 ist als Spange mit zwei Schenkeln ausgebildet, in die das Haltelement 1 eingelegt oder eingeclipst werden kann. Der Befestigungsabschnitt 200 bildet in diesem Ausführungsbeispiel eine Anlagefläche und Anschlag für die Stützkonstruktion 210. Die Öffnung des Haltelement 1 bildet den Heizleiteraufnahmeabschnitt 300. Erkennbar liegt zwischen Stützkonstruktion 210 und Heizleiteraufnahmeabschnitt 300 die umlaufende Nut 4.

Figur 9 zeigt ein weiteres Ausführungsbeispiel in einer geschnittenen und perspektivischen Ansicht. Hier ist das Halteelement 1 als Durchführung durch eine Abschirmung 100 ausgebildet. In dem Ausführungsbeispiel ist das Halteelement 1 dazu ausgebildet, in oder durch die Abschirmung 100 gesteckt zu werden. In einer Einbausituation wirkt das Halteelement 1 als elektrisch isolierende Hülse in der Abschirmung 100, wobei die Abschirmung 100 gleichzeitig als Stützkonstruktion 210 wirkt.

Das Halteelement 1 dieser Weiterbildung erlaubt eine elektrisch isolierte Durchführung eines Heizungsanschlusses 340 , das heißt einer elektrischen Zuleitung, durch die Abschirmung. Auf eine gesonderte elektrische Isolierung dieser elektrischen Zuleitung kann dann verzichtet werden.

Mit dem Heizungsanschluss 340 wird ein Heizleiter (nicht dargestellt) mit Strom versorgt. Somit ist die innere Oberfläche des Halteelements 1 dieses Ausführungsbeispiels als Heizleiteraufnahmeabschnitt 300 zur mittelbaren Aufnahme eines Heizleiters anzusprechen.

Die optisch deutlich abweichenden Ausführungsbeispiele zeigen, dass die Erfindung nicht an eine einzige Gestalt eines Halteelements gebunden ist.

Bevorzugt und wie in den diskutierten Ausführungsbeispielen gezeigt, ist das Halteelement 1 monolithisch, das heißt einstückig ausgebildet.

Figur 8a zeigt schematisch eine Nut 4, welche eine Haupterstreckungsrichtung - RN - aufweist, die an wenigstens einer Stelle abweicht von der Richtung der Ebenennormalen - N - an jener einen Stelle an der Oberfläche 3 des Halteelements 1, an welcher die Nut 4 ausgebildet ist. In anderen Worten verläuft die Nut 4 schräg zur Oberfläche 3. Durch diese Ausprägung kann eine abschattende Wirkung der Nut 4 weiter verbessert werden.

Figur 8b zeigt schematisch ein Halteelement mit einer Nut 4 derart, dass die Nut 4 zumindest abschnittsweise eine Hinterschneidung 6 aufweist, durch welche Hinterschneidung 6 zumindest abschnittsweise ein erster freier Nutquerschnitt bei einem ersten Abstand d1 zur Oberfläche 3 geringer ist als ein zweiter freier Nutquerschnitt bei einem zweiten Abstand d2 zur Oberfläche, wobei d1 < d2. Durch eine Hinterschneidung 6 kann eine Abschattung des Nutgrundes weiter verbessert werden, da jenseits der Hinterschneidung 6 kaum Niederschläge auftreten.

In Figur 8c ist eine Nut 4 dargestellt, die abschnittsweise eine Aufweitung 7 aufweist, durch welche Aufweitung 7 zumindest abschnittsweise ein freier Nutquerschnitt s vergrößert ist. Durch eine Aufweitung 7 kann insbesondere ein Niederschlag an Wänden der Nut 4 verringert werden.

## Patentansprüche

1. Halteelement aus Keramik für einen Hochtemperaturofen, mit wenigstens einem, an einem Teil einer Oberfläche (3) des Halteelements (1) ausgebildeten Befestigungsabschnitt (200) zur mechanischen Anbindung des Halteelements (1) an eine Stützkonstruktion (210), wenigstens einem, an einem Teil der Oberfläche (3) des Halteelements (1) ausgebildeten Heizleiteraufnahmeabschnitt (300) zur Aufnahme eines Heizleiters (310),
wobei an einem zwischen Befestigungsabschnitt (200) und Heizleiteraufnahmeabschnitt (300) liegenden umlaufenden Teil der Oberfläche (3) des Halteelements (1) wenigstens eine Nut (4) mit einer Tiefe (t) und einer Breite (b) ausgebildet ist, welche Nut (4) sich im Wesentlichen über den gesamten Umfang des umlaufenden Teils der Oberfläche (3) erstreckt und wenigstens ein gedachter Pfad zwischen dem Befestigungsabschnitt (200) und dem Heizleiteraufnahmeabschnitt (300) entlang der Oberfläche (3) des Halteelements (1) die wenigstens eine Nut (4) kreuzt, wobei die Nut (4) ein aus dem Verhältnis der Tiefe (t) zur Breite (b) gebildetes Aspektverhältnis von größer oder gleich 1,5 aufweist.

2. Halteelement nach Anspruch 1, wobei eine Vielzahl von Nuten (4) ausgebildet ist, insbesondere zwei oder drei Nuten (4).

3. Halteelement nach Anspruch 1 oder 2, wobei eine Nut (4) eine Tiefe (t) zwischen 3 mm und 10 mm aufweist.

4. Halteelement nach einem der vorangegangenen Ansprüche, wobei eine Nut (4) eine Breite (b) zwischen 0,25 mm und 3 mm aufweist.

5. Halteelement nach einem der vorangegangenen Ansprüche, wobei eine Nut (4) zumindest abschnittsweise eine Hinterschneidung (6) aufweist, durch welche Hinterschneidung (6) zumindest abschnittsweise ein erster freier Nutquerschnitt bei einem ersten Abstand (d1) zur Oberfläche (3) geringer ist als ein zweiter freier Nutquerschnitt bei einem zweiten Abstand (d2) zur Oberfläche (3), wobei d1 < d2.

6. Halteelement nach einem der vorangegangenen Ansprüche, wobei die Nut (4) zumindest abschnittsweise eine Aufweitung (7) aufweist, durch welche Aufweitung (7) zumindest abschnittsweise ein freier Nutquerschnitt (s) vergrößert ist.

7. Halteelement nach einem der vorangegangenen Ansprüche, wobei die Nut (4) eine Haupterstreckungsrichtung (RN) aufweist, die an wenigstens einer Stelle abweicht von der Richtung der Ebenennormalen (N) an jener einen Stelle an der Oberfläche (3) des Halteelements (1), an welcher die Nut (4) ausgebildet ist.

8. Halteelement nach einem der vorangegangenen Ansprüche, wobei das Halteelement (1) monolithisch ausgebildet ist.

9. Halteelement nach einem der vorangegangenen Ansprüche, wobei das Halteelement (1) als Durchführung durch eine Abschirmung (100) ausgebildet ist.

10. Halteelement nach einem der vorangegangenen Ansprüche, wobei das Halteelement (1) über ein binderbasiertes Fertigungsverfahren dargestellt ist.

11. Halteelement nach einem der vorangegangenen Ansprüche, wobei das Halteelement (1) über ein additives Fertigungsverfahren dargestellt ist.

12. Halteelement nach Anspruch 10, wobei das Halteelement (1) über Pulverspritzguss dargestellt ist.

13. Hochtemperaturofen mit wenigstens einem Halteelement (1) nach einem der vorangegangenen Ansprüche.

14. Verfahren zur Herstellung eines Halteelements (1) nach einem der vorangegangenen Ansprüche über ein binderbasiertes Fertigungsverfahren.

15. Verfahren zur Herstellung eines Halteelements (1) nach Anspruch 14, wobei das binderbasierte Fertigungsverfahren ausgewählt ist aus der Gruppe der Fertigungsverfahren, darunter insbesondere Filamentdruck, und Pulverspritzguss.

## Claims

1. A holding element made of ceramic for a high-temperature furnace, said holding element comprising at least one fastening portion (200) formed on a part of a surface (3) of the holding element (1) for mechanically connecting the holding element (1) to a supporting structure (210), at least one heat conductor receiving portion (300) formed on a part of the surface (3) of the holding element (1) for receiving a heat conductor (310), wherein at least one groove (4) having a depth (t) and a width (b) is formed on a peripheral part of the surface (3) of the holding element (1), said peripheral part being located between the fastening portion (200) and the heat conductor receiving portion (300), which groove (4) extends substantially over the entire periphery of the peripheral part of the surface (3) and at least one imaginary path between the fastening portion (200) and the heat conductor receiving portion (300) along the surface (3) of the holding element (1) crosses the at least one groove (4), wherein the groove (4) has an aspect ratio, formed by the ratio of the depth (t) to the width (b), of greater than or equal to 1.5.

2. The holding element as claimed in claim 1, wherein a plurality of grooves (4), in particular two or three grooves (4), is configured.

3. The holding element as claimed in claim 1 or 2, wherein a groove (4) has a depth (t) of between 3 mm and 10 mm.

4. The holding element as claimed in one of the preceding claims, wherein a groove (4) has a width (b) of between 0.25 mm and 3 mm.

5. The holding element as claimed in one of the preceding claims, wherein a groove (4) has at least in some portions an undercut (6), through which undercut (6) at least in some portions a first free groove cross section with a first spacing (d1) from the surface (3) is smaller than a second free groove cross section with a second spacing (d2) from the surface (3), wherein d1 < d2.

6. The holding element as claimed in one of the preceding claims, wherein the groove (4) has at least in some portions a widening (7), through which widening (7) a free groove cross section (s) is enlarged at least in some portions.

7. The holding element as claimed in one of the preceding claims, wherein the groove (4) has a main direction of extent (RN) which at least at one point deviates from the direction of the plane normals (N) at that one point on the surface (3) of the holding element (1) at which the groove (4) is configured.

8. The holding element as claimed in one of the preceding claims, wherein the holding element (1) is configured monolithically.

9. The holding element as claimed in one of the preceding claims, wherein the holding element (1) is configured as a through-passage through a shield (100).

10. The holding element as claimed in one of the preceding claims, wherein the holding element (1) is implemented via a binder-based production method.

11. The holding element as claimed in one of the preceding claims, wherein the holding element (1) is implemented via an additive production method.

12. The holding element as claimed in claim 10, wherein the holding element (1) is implemented via powder injection molding.

13. A high temperature furnace having at least one holding element (1) as claimed in one of the preceding claims.

14. A method for manufacturing a holding element (1) as claimed in one of the preceding claims via a binder-based production method.

15. The method for manufacturing a holding element (1) as claimed in claim 14, wherein the binder-based production method is selected from the group of production methods including, in particular, filament printing and powder injection molding.

## Revendications

1. Élément de maintien en céramique pour un four à haute température, avec au moins une partie de fixation (200) formée sur une partie d'une surface (3) de l'élément de maintien (1) pour relier mécaniquement l'élément de maintien (1) à une structure de support (210), au moins une partie (300) de réception de conducteur chauffant formée sur une partie de la surface (3) de l'élément de maintien (1) pour recevoir un conducteur chauffant (310),
au moins une rainure (4) ayant une profondeur (t) et une largeur (b) étant ménagée sur une partie périphérique de la surface (3) de l'élément de maintien (1), se trouvant entre la partie de fixation (200) et la partie (300) de réception de conducteur chauffant, ladite rainure (4) s'étendant sensiblement sur toute la périphérie de la partie périphérique de la surface (3), et au moins un chemin imaginaire entre la partie de fixation (200) et la partie (300) de réception de conducteur chauffant le long de la surface (3) de l'élément de maintien (1) croisant ladite au moins une rainure (4), ladite rainure (4) présentant un facteur de forme formé par le fait que le rapport de la profondeur (t) sur la largeur (b) est supérieur ou égal à 1,5.

2. Élément de maintien selon la revendication 1, dans lequel une pluralité de rainures (4) est réalisée, notamment deux ou trois rainures (4).

3. Élément de maintien selon la revendication 1 ou la revendication 2, dans lequel une rainure (4) présente une profondeur (t) comprise entre 3 mm et 10 mm.

4. Élément de maintien selon l'une des revendications précédentes, dans lequel une rainure (4) présente une largeur (b) comprise entre 0,25 mm et 3 mm.

5. Élément de maintien selon l'une des revendications précédentes, dans lequel une rainure (4) présente au moins par sections une contre-dépouille (6), de par laquelle une première portion transversale libre de la rainure à une première distance (d1) de la surface (3) est, au moins par sections, inférieure à une deuxième portion transversale libre de la rainure à une deuxième distance (d2) de la surface (3), d1 < d2.

6. Élément de maintien selon l'une des revendications précédentes, dans lequel la rainure (4) présente au moins par sections un élargissement (7), de par lequel une portion transversale libre de rainure (s) est augmentée au moins par sections.

7. Élément de maintien selon l'une des revendications précédentes, dans lequel la rainure (4) présente une direction d'extension principale (RN) qui s'écarte en au moins un endroit de la direction de la normale au plan (N) en cet endroit sur la surface (3) de l'élément de maintien (1) au niveau de laquelle la rainure (4) est formée.

8. Élément de maintien selon l'une des revendications précédentes, l'élément de maintien (1) étant monolithique.

9. Élément de maintien selon l'une des revendications précédentes, l'élément de maintien (1) étant conçu sous la forme d'un passage à travers un blindage (100).

10. Élément de maintien selon l'une des revendications précédentes, l'élément de maintien (1) étant réalisé par un procédé de fabrication à base de liant.

11. Élément de maintien selon l'une des revendications précédentes, l'élément de maintien (1) étant réalisé par un procédé de fabrication additif.

12. Élément de maintien selon la revendication 10, l'élément de maintien (1) étant réalisé par moulage par injection de poudre.

13. Four à haute température comportant au moins un élément de maintien (1) selon l'une des revendications précédentes.

14. Procédé de fabrication d'un élément de maintien (1) selon l'une des revendications précédentes par un procédé de fabrication à base de liant.

15. Procédé de fabrication d'un élément de maintien (1) selon la revendication 14, dans lequel le procédé de fabrication à base de liant est choisi dans le groupe des procédés de fabrication, dont notamment l'impression de filaments, et le moulage par injection de poudre.
